(19) Europäisches Patentamt
European Patent Office
Office européen des brevets

(11) EP 3 671 257 A1

(12) **EUROPÄISCHE PATENTANMELDUNG**

(43) Veröffentlichungstag:
**24.06.2020  Patentblatt 2020/26**

(51) Int Cl.:
*G01S 7/40* (2006.01)     *G01S 13/08* (2006.01)

(21) Anmeldenummer: **18214292.7**

(22) Anmeldetag: **20.12.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **SICK AG**
**79183 Waldkirch (DE)**

(72) Erfinder:
• **Jachmann, Dr. Fabian**
  **79102 Freiburg (DE)**
• **Kolb, Dr. Stephan**
  **79183 Waldkirch (DE)**

Bemerkungen:
Geänderte Patentansprüche gemäss Regel 137(2) EPÜ.

(54) **SICHERE RADARVORRICHTUNG UND VERFAHREN ZUR SICHEREN ERFASSUNG EINES OBJEKTS**

(57)    Es wird eine sichere Radarvorrichtung (10) zur Erfassung eines Objekts (22) in einem Überwachungsbereich (20) angegeben, die eine Sende-/Empfangseinheit (12) mit mindestens einer über eine Verbindungsleitung angeschlossenen Antenne (16) zum Aussenden eines Radarsignals (18) und zum Erzeugen eines Empfangssignals aus einem Radarsignalecho des Radarsignals (18) an dem Objekt (22), ein internes Referenzziel (26) zum Erzeugen eines Referenzechos sowie eine Auswertungseinheit (24) aufweist, die dafür ausgebildet ist, das Objekt (22) durch Auswertung des Empfangssignals zu erfassen und die Funktionsfähigkeit der Radarvorrichtung (10) anhand des Referenzechos zu prüfen. Dabei weist das interne Referenzziel eine Referenzleitung (26) auf, auf den das von der Sende-Empfangseinheit (12) erzeugte Signal an einer ersten Koppelstelle (28) vor der Abstrahlung als Radarsignal (18) von der Verbindungsleitung (14) überspricht und von dem das Signal nach Weiterleitung auf der Referenzleitung (26) an einer zweiten Koppelstelle (30) als Referenzecho auf die Verbindungsleitung (14) überspricht.

Figur 1

EP 3 671 257 A1

**Beschreibung**

Die Erfindung betrifft eine sichere Radarvorrichtung und ein Verfahren zur sicheren Erfassung eines Objekts in einem Überwachungsbereich nach dem Oberbegriff von Anspruch 1 beziehungsweise 15.

Die Überwachung mit Radar ist seit langem bekannt und wird in vielen Anwendungsfeldern genutzt. Eine Einsatzmöglichkeit ist die Detektion von gefährlichen Situationen, etwa das Eindringen von Personen in ein Schutzfeld, das zur Absicherung einer Maschine vorgesehen ist, oder etwas allgemeiner die zu große Annäherung einer Person an einen Gefahrenbereich. Bekannt ist auch, im Automobilbereich andere Fahrzeuge, Fußgänger oder Hindernisse zu erkennen.

Damit ein Radar in solchen sicherheitstechnischen Anwendungen genutzt werden kann, ist erforderlich, entsprechend dem Gefährdungsrisiko dessen Funktionstüchtigkeit zu gewährleisten oder zumindest zuverlässig festzustellen, ob sie noch gegeben ist. Dazu dienen verschiedene Maßnahmen wie redundante oder diversitär-redundante Komponenten, mehrkanalige Detektions- und Auswertungspfade und Selbsttests. Für sichere Sensoren sind Standards mit Sicherheitsstufen definiert (SIL, Safety Integrity Level), die festlegen, welche Arten von Fehlern sicher vermieden oder zumindest sicher aufgedeckt werden müssen. Ist ein Fehler erkannt, löst das so eingesetzte Radar eine entsprechende Absicherungsmaßnahme, wie ein Stillsetzen der überwachten Maschine, aus.

Im Stand der Technik gibt es verschiedene Ansätze für derartige Selbstüberprüfungen. In der DE 197 44 731 A1 werden Signalleitungen für ein Oszillatorrückführungssignal dicht an den Empfangspfad herangeführt, damit eine auswertbar starke Signalüberkopplung erfolgt. Das geschieht aber in einem dedizierten Testmodus, für den der eigentliche Messbetrieb unterbrochen werden muss. Die Umsetzung ist aufgrund zusätzlicher Komponenten vergleichsweise aufwändig und verhindert, ein vollständiges Radarsystem als Ein-Chip-Lösung aufzubauen. Außerdem wird nicht der vollständige Pfad der Analoghardware getestet.

Die EP 2 755 044 A1 erzeugt in einem FMCW-Radar ein virtuelles Ziel und damit ein zusätzliches Testsignal. Der Sendepfad bleibt dabei jedoch ungetestet, und es ist vergleichsweise aufwändige zusätzliche Hardware erforderlich.

Die DE 10 2010 002 759 A1 mischt in einem gesonderten Selbsttestmodus das Empfangssignal nicht mit dem Sendesignal, sondern einem frequenzverschobenen Testsignal.

Ein anderer Teilaspekt, der ein Radar sicher im Sinne der Normen macht, ist die Überprüfung auf Verschmutzung eines Radoms, wie etwa in DE 10 2006 022 830 A1, wo eine Führungseinheit zwischen Radom und Radar eine reflektierte Welle von einer anhaftenden Masse zur der Empfangseinheit führt. Die US 6 954 172 B2 befasst sich mit dem Erkennen von Verunreinigungen auf dem Radom eines Radarsystems, indem eine Delay-Line in das Radom gelegt wird. In der DE 10 2011 089 421 A1 sitzt das Radar hinter einer transparenten Abdeckung eines Fahrzeugscheinwerfers, wodurch die Radarsignale nicht verdeckt werden, und gegebenenfalls wird auch ein Reinigungssystem des Scheinwerfers mitgenutzt. Das verringert zwar die Wahrscheinlichkeit einer Beeinträchtigung, aber geprüft wird es nicht. Ohnehin stellt ein ausreichend strahlungsdurchlässiges Radom die übrige Funktion des Radars nicht sicher, das ist also kein Selbsttest des eigentlichen Radarsystems.

Die DE 10 2009 001 265 A1 offenbart ein Radar mit Blindheitserkennung, welches testet, ob ihr Radom zu stark verschmutzt ist. Dabei wird davon ausgegangen, dass ein solcher Test im Messbetrieb nicht möglich ist, weil ein Schmutzbelag zu nahe ist, um aufgelöst zu werden. Daher schaltet das System zyklisch in einen Testmodus, in dem andere Parameter für das Sendesignal verwendet werden. Dadurch wird zum einen nur das Radom getestet, und zudem ist das Radar während dieses Tests nicht messfähig.

Die DE 20 2017 103 676 U1 verwendet das Radom als Referenzziel, um die Funktionsfähigkeit zu prüfen. Das hat den Nachteil, dass das Radom entsprechend ausgestaltet werden muss, so dass der Funktionstest erneut nicht kompakt in der Elektronik oder gar auf einem Chip erfolgt. Außerdem überlagern sich Einflüsse des als Referenzziels dienenden Radoms mit sehr nahen Zielen, und die Auswertung ist daher kompliziert und nicht immer eindeutig, zumal auch Verschmutzungseffekte und sonstige Beeinträchtigungen des Radoms in den Selbsttest hineinspielen.

In der US 5 432 516 A wird ein weiteres Radar mit Selbsttest beschrieben, das aber letztlich mehrere Nachteile miteinander vereint. Es wird nämlich mit einer Hilfsantenne ein zusätzliches Signal erzeugt, so dass der Sendepfad nicht mit geprüft wird. Außerdem wird die Hilfsantenne nur in einem eigenen Testmodus verwendet, und währenddessen erfolgt keine Messung.

Die US 7 295 151 B2 erzeugt künstlich ein Referenzsignal, mit dem Fehlfunktionen eines radarbasierten Höhenmessers aufgedeckt werden.

Bei der Überwachung im optischen Spektrum statt durch Radar, insbesondere mittels Laserscannern, ist bekannt, ein Referenzziel in einem ungenutzten Scanwinkelbereich anzuordnen, dessen Echo analysiert wird, um die Detektionsfähigkeit des Laserscanners zu überprüfen. Dies wird beispielsweise in DE 43 40 756 A1 beschrieben. Wegen der vergleichsweise extrem kurzen Wellenlänge von Licht und dessen ganz anderen Eigenschaften, etwa bei undurchsichtigen Materialien und Medien, Nebel und dergleichen, sind gerade sicherheitsrelevante Konzepte zwischen Laserscanner und Radar nicht einfach austauschbar. Bei feststehenden Radarsensoren gibt es ohnehin keine Möglichkeit, ein Referenzziel zyklisch abzutasten.

Es ist daher Aufgabe der Erfindung, einen verbesserten Selbsttest für ein Radar anzugeben.

Diese Aufgabe wird durch eine sichere Radarvorrichtung und ein Verfahren zur sicheren Erfassung eines Objekts in einem Überwachungsbereich nach Anspruch 1 beziehungsweise 15 gelöst. Die Radarvorrichtung strahlt über mindestens eine Antenne ein Radarsignal ab, dessen Echo von dem Objekt in ein Empfangssignal gewandelt wird. Die Antenne ist über eine Verbindungsleitung an eine Sende-/Empfangseinheit angeschlossen. Ein internes Referenzziel erzeugt ein Referenzecho, also ein Empfangssignal, das einem scheinbaren Objekt in einer bekannten Entfernung entspricht. Das Empfangssignal wird ausgewertet, um einerseits das Objekt anhand von dessen Echo zu erfassen und andererseits als Selbsttest die Funktionsfähigkeit der Radarvorrichtung anhand des Referenzechos aus der Referenzleitung zu prüfen. Aufgrund des Selbsttests und möglicher weiterer Sicherheitsmaßnahmen wird die Radarvorrichtung sicher im Sinne einschlägiger Sicherheitsnormen beziehungsweise Sicherheitsstufen (SIL).

Die Erfindung geht von dem Grundgedanken aus, als Referenzziel eine Referenzleitung beziehungsweise eine Referenzleitungsschleife zu verwenden und durch Übersprechen beziehungsweise Überkoppeln an die Verbindungsleitung anzukoppeln. Die Referenzleitung bildet einen zusätzlichen Signalweg mit definierter Signalverzögerung entsprechend der Länge der Referenzleitung. Das Signal, das die Sende-Empfangseinheit durch die Verbindungsleitung zu der Antenne schickt, erzeugt vor dem Abstrahlen an einer ersten Koppelstelle durch Übersprechen ein Signal auf der Referenzleitung. Dieser führt das Signal über eine definierte Leitungsstrecke entsprechend der gewünschten Verzögerung zu einer zweiten Koppelstelle, wo durch erneutes Übersprechen auf die Verbindungsleitung das Referenzecho entsteht.

Die Erfindung hat den Vorteil, dass die Detektionsfähigkeit der Radarvorrichtung über den gesamten Sende- und Empfangspfad zuverlässig überwacht werden kann. Die Messung bleibt ohne Beeinträchtigung, da im Empfangssignal das Referenzecho von Echos zeitlich getrennt ist, die von Objekten stammen. Ein besonderer Testmodus ist nicht erforderlich. Der Selbsttest mittels Referenzleitung ist äußerst kompakt, kostengünstig und einfach umsetzbar.

Bevorzugt weist die Antenne eine Sendeantenne und eine Empfangsantenne und die Verbindungsleitung eine erste Verbindungsleitung mit der ersten Koppelstelle zwischen der Sende-/Empfangseinheit und der Sendeantenne und eine zweite Verbindungsleitung mit der zweiten Koppelstelle zwischen der Empfangsantenne und der Sende-/Empfangseinheit auf. Prinzipiell ist bei einer Radarvorrichtung eine gemeinsame Sende-Empfangsantenne möglich. Durch das Ein- und Auskoppeln zwischen Verbindungsleitung und Referenzleitung entstehen dabei aber leicht unerwünschte Überlagerungen, so dass für eine erfindungsgemäße Radarvorrichtung eine Trennung Sende- und Empfangspfad zumindest an der Antenne vorteilhaft ist. Die Sende-/Empfangseinheit selbst kann weiterhin ein Transceiver mit zwei Anschlüssen sein, getrennte Sender und Empfänger sind aber auch möglich.

Die Antenne weist bevorzugt eine Patchantenne auf. Dadurch lässt sich die Antenne, oder lassen sich die Antennen im Falle getrennter Sende- und Empfangsantennen, besonders kompakt auf einer Leiterplatte unterbringen. Diese Leiterplatte kann auch weitere Komponenten umfassen, insbesondere die Sende-/Empfangseinheit samt Verbindungsleitung, je nach Ausführungsform aber außerdem auch noch zumindest Teile von Referenzleitung und/oder Auswertungseinheit.

Die Referenzleitung weist bevorzugt eine Mikrostreifenleitung oder Koplanarleitung auf. Das ist eine Möglichkeit, um die Referenzleitung kompakt und kostengünstig auf einer Leiterplatte unterzubringen, vorzugsweise derselben Leiterplatte wie Antenne, Sende-/Empfangseinheit und/oder Auswertungseinheit.

Die Referenzleitung weist bevorzugt einen Hohlleiter oder einen dielektrischen Wellenleiter auf. Das ist eine Ausführungsform, in welcher die Referenzleitung zumindest nicht vollständig auf einer Leiterplatte angeordnet ist. Der Hohlleiter kann mit oder ohne Füllung ausgebildet sein.

Die erste Koppelstelle und/oder die zweite Koppelstelle weist bevorzugt einen Richtkoppler auf. Das sorgt für einen weitgehend reflexionsfreien oder jedenfalls reflexionsarmen Übergang in die Referenzleitung beziehungsweise aus der Referenzleitung. Derartige Reflexionen würden sonst den Selbsttest oder je nach Ausprägung sogar noch die Messung beeinflussen. Mögliche Ausgestaltungen eines Richtkopplers sind Leitungskoppler, Hybridkoppler, Ringkoppler oder Wilkinson-Teiler. Auch für eine Referenzleitung in Hohlleitertechnik gibt es geeignete Richtkoppler wie etwa "Magic-Tee".

Die Referenzleitung weist bevorzugt mindestens ein angepasstes Dämpfungselement (Wellensumpf, Reflection Drain) auf. Noch bevorzugter sind zwei solche Dämpfungselemente vorgesehen. Das Dämpfungselement ist in Gegenrichtung der vorgesehenen Ausbreitung des Signals auf der Referenzleitung angeordnet, gleichsam an den losen Enden, um Reflexionen von dort zu unterdrücken. Die Anordnung auf der Referenzleitung ist demnach: erstes Dämpfungselement, erste Koppelstelle, zweite Koppelstelle, zweites Dämpfungselement, wobei nicht zwingend beide Dämpfungselemente vorgesehen sein müssen.

Das Radarsignal wird vorzugsweise mit einer Bandbreite von mehreren GHz oder mehreren zehn GHz moduliert. Damit ist die Radarvorrichtung ein Breitbandradar, dessen Messauslösung wenige Zentimeter oder sogar noch weniger beträgt. Dabei weist bevorzugt das Radarsignal eine Trägerfrequenz von zumindest zehn oder sogar einigen zehn GHz auf. Solche Trägerfrequenzen sind inzwischen technisch zugänglich und ermöglichen eine besonders große Bandbreite. Ein beispielhaftes nutzbares Band liegt bei 57-64 GHz und ist mit 7 GHz das derzeit größte regulatorisch verfügbare Band, ein anderes Beispiel ist das 79 GHz-Band im Automotive-Bereich mit 4 GHz oder 5 GHz Bandbreite. Das ist aber keine technische Einschränkung, auch andere und insbesondere breitere Bänder in anderer Lage sind denkbar. Mit einem Breitbandradar kann das Referenzecho besonders gut in kurzem zeitlichen Abstand zum Sendesignal aufgelöst und von Echos unterschieden werden, die nahe Objekte erzeugen. Bei 4 GHz Bandbreite beispielsweise genügt ein Referenzleiter kurzer Länge von etwa 20 cm, um das Referenzecho sauber auflösen zu können. Damit existiert ein virtuelles Echo in etwa 10 cm Entfernung, und ab etwa 15 cm Abstand zur Antenne ist solch ein System bereits voll detektionsfähig. Bei einem weniger breitbandigen System, etwa im 24 GHz-Band mit 0,6 GHz Bandbreite, würde eine integrierte Übersprechleitung wie die Referenzleitung das Gerät auf den ersten 1,5 m blind machen.

Die Verbindungsleitung weist bevorzugt mindestens ein Verzögerungselement auf, insbesondere zwischen Koppelstelle und Antenne. Das Verzögerungselement sorgt dafür, dass ein Echo im Empfangssignal zeitlich nach hinten verschoben wird, entsprechend der längeren Laufzeit von einem ferneren Objekt. Die durch das Verzögerungselement bewirkte Verschiebung kann anhand von Parametern des Verzögerungselements oder einer Kalibration wieder ausgeglichen werden. Befindet sich das Verzögerungselement zwischen Koppelstelle und Antenne, so erfolgt eine zusätzliche zeitliche Trennung zwischen Referenzecho und dem Echo von einem Objekt. Dadurch wird eine mögliche Überlagerung zwischen Referenzecho und Echo verhindert. Bei Ausführungsformen mit erster und zweiter Verbindungsleitung zum Senden und Empfangen ist ein Verzögerungselement in der ersten und/oder der zweiten Verbindungsleitung möglich. Die technische Ausführung des Verzögerungselements kann analog zu derjenigen bei der Referenzleitung erfolgen, d.h. insbesondere in Form einer Mikrostreifen- oder Koplanarleitung.

Die Sende-/Empfangseinheit weist bevorzugt mehrere Sende- und/oder Empfangskanäle auf, wobei die Referenzleitung das Signal eines Sendekanals auf einen Empfangskanal oder auf mehrere Empfangskanäle zurückführt. Mit einem derartigen mehrkanaligen System können zusätzliche Informationen und/oder größere Bereiche erfasst werden. Dabei ist denkbar, die Sender und Empfänger paarweise zu testen, indem eine jeweilige Referenzleitung das Referenzecho von einem Sender in den zugehörigen Empfänger leitet. Es ist aber auch möglich, mehrere Empfänger über die Referenzleitung mit Referenzechos von demselben Sender zu verbinden, wobei dann vorzugsweise ein Wilkinson-Teiler genutzt wird, um beim Überkoppeln in mehrere Leitungen Reflexionen zu vermeiden.

Die Steuer- und Auswertungseinheit ist bevorzugt dafür ausgebildet, bei der Prüfung auf Funktionsfähigkeit der Radarvorrichtung Empfangssignale aus mehreren Empfangskanälen miteinander zu vergleichen. Da üblicherweise Antennen mit vergleichbarer Antennencharakteristik verwendet werden, sind im Empfangssignal ähnliche Amplituden und nur andere Phasen zu erwarten, so dass ein Fehler auch durch Quervergleich zwischen den Kanälen aufgedeckt wird. Ansonsten wäre auch vorstellbar, unterschiedliche Antennencharakteristiken rechnerisch beim Vergleich zu berücksichtigen.

Die Steuer- und Auswertungseinheit ist bevorzugt dafür ausgebildet, mindestens einen Sende-/Empfangskanal mittels Referenzleitung und mindestens einen Sende-/Empfangskanal nur durch Vergleich der Empfangssignale zu prüfen. Der Quervergleich dient dann nicht nur als zusätzliche Plausibilitätsprüfung, sondern ersetzt für mindestens einen Kanal sogar den Selbsttest mittels Referenzleitung, so dass noch weniger Hardwareaufwand anfällt.

Die Auswertungseinheit ist bevorzugt dafür ausgebildet ist, aus dem Empfangssignal eine Signallaufzeit und damit eine Entfernung zu dem Objekt zu bestimmen. Dazu wird vorzugsweise FMCW (Frequency-Modulated Continuous Wave) eingesetzt. Andere Verfahren wie Pulslaufzeitverfahren oder Messung einer Phasenverschiebung sind aber auch denkbar. Die Entfernungsmessung wird vorzugsweise auch getestet, indem eine aus dem Referenzecho bestimmte Entfernung mit einer Erwartung bei intaktem Gerät verglichen wird.

Die Radarvorrichtung ist bevorzugt als scannendes System zum Abtasten des Überwachungsbereichs ausgebildet. Dabei wird unter einem scannenden System sowohl eine mechanisch bewegte, beispielsweise rotierende Antenne verstanden, als auch der Einsatz mehrerer Antennen für unterschiedliche Scanwinkel oder ein Phased Array, das die Erfassungsrichtung durch Ansteuerung durch Signale mit geeigneten Phasenlagen wechselt. In einem MIMO-Radar (Multiple Input Multiple Output) wird die effektive Antennenanzahl virtuell erhöht. Es werden Signale mittels Multiplexing ausgesandt, sei es zeitlich oder durch Phasencodierung, und die Winkelauswertung erfolgt anhand von Laufzeitunterschieden. Die Referenzleitung erzeugt das Referenzecho vorzugsweise unabhängig von dem Scanvorgang, so dass der Selbsttest kontinuierlich für alle Scanrichtungen erfolgen kann.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    eine schematische Blockdarstellung einer Radarvorrichtung;

Fig. 2    eine schematische Darstellung eines Sende- und Empfangspfads einer Radarvorrichtung mit einer Referenzleitungsschleife für deren Selbsttest; und

Fig. 3    eine Darstellung ähnlich Figur 2 mit zusätzlichen Verzögerungselementen zur besseren zeitlichen Trennung von Referenz- und Objektechos.

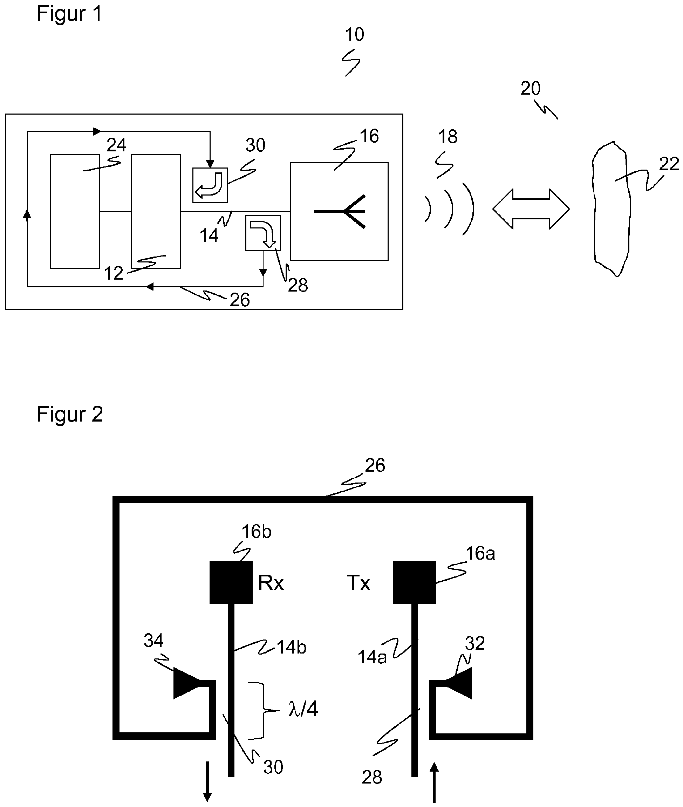

Figur 1 zeigt eine schematische Blockdarstellung einer sicheren Radarvorrichtung 10. Eine Sende-/Empfangseinheit 12 ist über eine Verbindungsleitung 14 mit einer Antenne 16 verbunden. Die Sende-/Empfangseinheit 12 erzeugt ein elektrisches Signal, das von der Antenne 16 als Radarsignal 18 in einen Überwachungsbereich 20 abgestrahlt wird. Trifft das Radarsignal 18 auf ein Objekt 22, so wird ein Teil des Radarsignals 18 zu der Radarvorrichtung 10 zurückgeworfen. Dort wird es über die Antenne 16 in der Sende-/Empfangseinheit 12 wieder empfangen und das Empfangssignal einer Auswertungseinheit 24 zugeführt.

Die Auswertung des Empfangssignals beschränkt sich im einfachsten Fall auf eine binäre Anwesenheitsfeststellung des Objekts 22. Dazu muss lediglich eine signifikante Veränderung des Empfangssignals festgestellt werden, etwa durch eine Amplitudenschwelle. In vielen Ausführungsformen wird aber auch der Abstand gemessen. Das basiert in der Regel auf einem Zusammenspiel mit einer geeigneten Modulation des ausgesandten Radarsignals. Einige Beispiele sind ein Pulsverfahren mit Bestimmung der Laufzeit eines Sendepulses, ein Phasenverfahren mit periodischer Modulation des ausgesandten Radarsignals und Bestimmung der Phasendifferenz zu dem Empfangssignal sowie eine rampenartige Frequenzmodulation mit Auswertung der Frequenz des Empfangssignals (FMCW).

Durch ein Abtastverfahren kann der Überwachungsbereich 20 insgesamt vergrößert werden. Dabei wird der jeweilige Abtastwinkel variiert, wobei das wiederum auf verschiedene Weisen möglich ist. Einige Beispiele sind Ausführungsformen der Antenne 16 als rotierende Richtantenne, mehrere abwechselnd angesteuerte, verschieden ausgerichtete Antennen oder eine Antennenanordnung, deren Richtcharakteristik durch Ansteuerung mit verschiedenen Phasen wechselt (Phased Array). Wird ein Objekt 22 erfasst, so ergibt sich aus der Richtung, in die das Radarsignal ausgesandt wird, eine Winkelinformation.

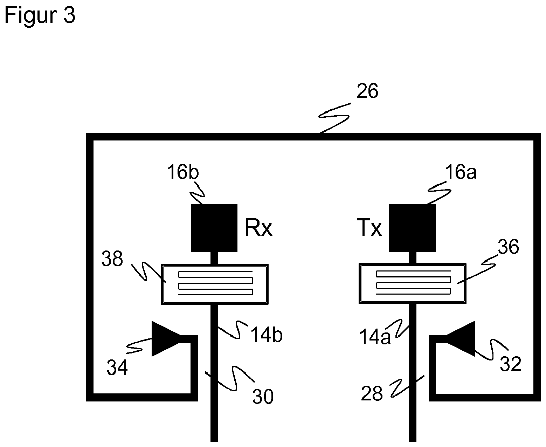

Die Radarvorrichtung 10 ist für einen Selbsttest ausgebildet, um ihr Funktionsfähigkeit zu gewährleisten beziehungsweise einen Ausfall zuverlässig zu erkennen. Dazu ist eine Referenzleitung 26 vorgesehen, das ein Referenzecho erzeugt. Dies wird später unter Bezugnahme auf die Figuren 2 und 3 genauer erläutert. Kurz zusammengefasst entsteht das Referenzecho, indem das Signal der Sende-/Empfangseinheit 12 auf der Verbindungsleitung 14 zur Antenne 16 an einer ersten Koppelstelle 28 auf der Referenzleitung 26 überspricht, auf der Referenzleitung 26 zu einer zweiten Koppelstelle 30 läuft und dort ein zweites Mal zurück auf die Verbindungsleitung 14 überspricht.

Die Referenzleitung 26 bildet damit eine Art internes Referenzziel, denn das Referenzecho wird von der Auswertungseinheit 24 als scheinbares Objekt in kurzer, durch die Eigenschaften der Referenzleitung 26 definierter Entfernung erfasst. Der Selbsttest deckt auf, wenn das Referenzecho nicht mehr der Erwartung entspricht, wobei Toleranzen je nach geforderter Genauigkeit und Sicherheitsstufe möglich sind. Die Referenzleitung 26 befindet sich vorzugsweise vollständig innerhalb eines Gehäuses der Radarvorrichtung 10. Es sind kompakte Bauweisen mit der Referenzleitung 26 auf einer Leiterplatte möglich. Dabei können wenige Leiterplatten oder sogar nur eine einzige Leiterplatte die Sende-/Empfangseinheit 12, die Verbindungsleitung 14 mit den Koppelstellen 28, 30, der Referenzleitung 26, die Antenne 16 und/oder die Auswertungseinheit 24 aufweisen.

Radarvorrichtungen sind seit langem in vielfältigen Bauweisen bekannt, so dass der Aufbau und das Messprinzip nur grob beschrieben sind und die Erfindung auch in dieser Hinsicht nicht auf die genannten Varianten beschränkt ist. So ist beispielsweise in Figur 1 die Sende-/Empfangseinheit 12 als Transceiver dargestellt, stattdessen können auch separate Sende- und Empfangsbausteine eingesetzt werden. Umgekehrt ist die Antenne 16 in bevorzugter Ausführungsform keine gemeinsame Sende-/Empfangsantenne wie dargestellt, sondern es ist jeweils eine Sendeantenne und eine Empfangsantenne samt Verbindungsleitung vorgesehen.

Es ist vorteilhaft, wenn es sich bei der Radarvorrichtung 10 um ein breitbandiges System mit einer hohen Entfernungsauflösung handelt. In einem Radarsensor bestimmt sich die radiale Trennfähigkeit von zwei Objekten aus $\Delta R = \frac{c_0}{2\,BW}$, wobei $c_0$ die Lichtgeschwindigkeit und *BW* die eingesetzte Bandbreite in Hz ist. Bei Trägerfrequenzen oberhalb 10 GHz lassen sich heute Bandbreiten von mehreren 10 GHz realisieren. Die radiale Trennfähigkeit gilt entsprechend für das Referenzecho und das Echo von dem Objekt 22. Mit einem breitbandigen System werden Blindzonen im Nahbereich verringert oder verhindert, und es kann auch die Referenzleitung 26 recht kurz sein. Bei 4 GHz Bandbreite reichen etwa 20 cm Leitungslänge aus, um ein Echo aus etwa 10 cm Entfernung zu simulieren.

Figur 2 zeigt eine schematisch einen Ausschnitt der Radarvorrichtung 10 im Bereich der Koppelstellen 28, 30. In dieser Ausführungsform ist die Antenne 16 in eine eigene Sendeantenne 16a und Empfangsantenne 16b aufgeteilt. Die Referenzleitung 26 ist hier umlaufend um die Antennen 16a-b herumgeführt, dies ist aber wie die alternative Darstellung in Figur 1 mit einer Referenzleitung 26 als Schleife um die Auswertungseinheit 24 rein beispielhaft. Die Referenzleitung 26 kann eine nahezu beliebige Geometrie und Anordnung aufweisen und wird häufig ein Muster etwa aus mehreren Teilschlaufen bilden, um seine Länge kompakt unterzubringen.

Ausgeführt ist die Referenzleitung 26 vorzugsweise als Mikrostreifenleitung oder als Koplanarleitung auf einer Leiterplatte der Verbindungsleitung 14a-b. Alternativ ist auch eine Realisierung außerhalb der Leiterplatte vorstellbar, beispielsweise in Form eines Hohlleiters mit oder ohne Füllung oder eines dielektrischen Wellenleiters. Dann können mit dem andern Ausbreitungsmedium längere Laufzeiten erzielt werden. Die Antennen 16a-b sind beispielsweise Patchantennen und können gemeinsam mit der Referenzleitung 26 auf derselben Leiterplatte angeordnet werden.

Die Verbindungsleitung weist eine sendeseitige erste Verbindungsleitung 14a mit der ersten Koppelstelle 28 und eine empfangsseitige zweite Verbindungsleitung 14b mit der zweiten Koppelstelle 30 auf. Das von der Sende-/Empfangseinheit 12 kommende, durch einen nach oben weisenden Pfeil symbolisierte Sendesignal auf der sendeseitigen Verbindungsleitung 14a wird über die Sendeantenne 16a als Radarsignal 18 abgestrahlt. An der ersten Koppelstelle 28 koppelt oder spricht es mit einer geeigneten Koppeldämpfung auf die Referenzleitung 26 über. Dort auf der Referenzleitung 26 läuft es um die Antennen 16a-b herum zu der zweiten Koppelstelle 30, und durch erneutes Übersprechen nun auf die empfangsseitige Verbindungsleitung 14b wird ein um den Laufweg auf der Referenzleitung 26 verzögertes Referenzecho erzeugt. Das Referenzecho überlagert sich dem Empfangssignal von der Empfangsantenne 16b, das durch einen Pfeil nach unten symbolisiert ist und der Sende-/Empfangseinheit 12 zugeführt wird. Das Referenzecho ist aber von einem Echo des Objekts 22 zeitlich separiert.

Die Anbindung der Referenzleitung 26 an den eigentlichen Sende-/Empfangspfad mit den Verbindungsleitungen 14a-b sollte möglichst reflexions- und rückwirkungsfrei sein. Außerdem ist auch eine richtungsabhängige Kopplung angestrebt, damit das Signal auf der Referenzleitung 26 tatsächlich von der ersten Koppelstelle 28 zu der zweiten Koppelstelle läuft und später das Referenzecho auf der empfangsseitigen Verbindungsleitung 14b nicht etwa zu der Empfangsantenne 16b, sondern zu der Sende-/Empfangseinheit 12. Ansonsten würde die Detektionsfähigkeit der Radarvorrichtung 10 durch Mehrfachreflexionen und vergleichbare Überlagerungseffekte eingeschränkt.

Ein Beispiel einer entsprechend geeigneten Hochfrequenzstruktur für die Koppelstellen 28, 30 ist ein Leitungskoppler. Dabei sind zwei Leitungstücke über eine bestimmte Länge, vorzugsweise λ/4, d.h. ein Viertel der Wellenlänge der Mittenfrequenz, dicht parallel zueinander geführt. Der Abstand der Leitungsstücke und deren Leiterbreite bestimmen dann die Impedanz sowie die Kopplungsintensität und können zur Optimierung der reflexionsarmen Anpassung genutzt werden. Es sind auch andere Richtkoppler denkbar, wie beispielsweise Hybridkoppler, Ringkoppler oder Wilkinson-Teiler. Auch im Falle einer Referenzleitung 26 in Hohlleitertechnik können Richtkoppler realisiert werden, etwa als sogenannter "Magic-Tee" oder Hybrid-T.

Zur weiteren Vermeidung von unerwünschten Reflexionen ist die Referenzleitung 26 vorzugsweise mit angepassten Dämpfungselementen 32, 34 versehen (Wellensumpf, Reflection Drain), und zwar an den Enden, die in Gegenrichtung zur vorgesehenen Signalrichtung auf der Referenzleitung 26 liegen. Eine etwaige Reflexion an der Sendeantenne 16a, die in der nicht vorgesehenen Richtung auf die Referenzleitung 26 überspricht, wird in dem ersten sendeseitigen Dämpfungselement 32 der Referenzleitung 26 unterdrückt. Das an der zweiten Koppelstelle 30 vorbeilaufende Signal wiederum verliert sich in dem zweiten empfangsseitigen Dämpfungselement 34 der Referenzleitung 26, so dass keine Reflexionen entstehen, die in der falschen Signalrichtung auf die empfangsseitige Verbindungsleitung 14b übersprechen würden.

Die derart reflexionsarm mittels Übersprechen angebundene Referenzleitung 26 simuliert ein Referenzziel in einer Entfernung, welche der halben Laufzeit auf der Referenzleitung beziehungsweise der Länge der Referenzleitung 26 zwischen den Koppelstellen 28, 30 entspricht. Mit dem derart erzeugten Referenzecho kann die Funktionsweise der vollständigen Signalkette von der Sende-/Empfangseinheit 12 über die Antenne 16 und zurück sowie die Auswertungseinheit 24 samt aller relevanten Leitungen überprüft werden. Dazu zählen auch nicht eigens erläuterte mögliche Komponenten wie ein Sendeverstärker, ein Empfängerverstärker, ein Mischer, ein Zwischenfrequenz-Block, diverse Filter und AD-Wandler. Die Auswertungseinheit 24 hat eine vorgegebene oder eingelernte beziehungsweise kalibrierte Erwartungshaltung an das Referenzecho, wie den darauf gewonnenen Abstandswert oder an dessen Amplitude und/oder Phase oder sonstige Eigenschaften insbesondere im Zeitverlauf. Nur solange das Referenzecho diese Erwartung im Rahmen vorgegebener Toleranzen erfüllt, ist der Selbsttest erfolgreich und damit die Funktionsfähigkeit der Radarvorrichtung 10 bestätigt. Das gesamte System kann einschließlich Selbsttest sehr kompakt aufgebaut werden, sogar auf einer einzigen Leiterplatte (One-Chip), weil die Referenzleitung 26 im Gegensatz zu herkömmlichen Referenzzielen in entsprechend kompakter Technologie realisiert werden kann.

Figur 3 ist eine Darstellung ähnlich Figur 2 eines Ausschnitts der Radarvorrichtung 10 im Bereich der Koppelstellen 28, 30. Zusätzlich sind hier Verzögerungselemente 36, 38 zur besseren zeitlichen Trennung von Referenzecho und Echo des Objekts 22 vorgesehen. Das verbessert die Detektionsfähigkeit im Nahbereich weiter und ermöglicht auch eine kürzere Referenzleitung 26. Ansonsten besteht die Gefahr, dass das Referenzecho das Echo eines Objekts 22 in sehr kurzer Entfernung überlagert. Die Auswertungseinheit 24 kompensiert die Verzögerung, beispielsweise im Rahmen einer Kalibration ab Werk oder während einer Einrichtphase.

Die Verzögerungselemente 36, 38 können sende- und/oder empfangsseitig vorgesehen sein. Sie sind vorzugsweise zwischen der jeweiligen Koppelstelle 28, 30 und Antenne 16a-b angeordnet, damit die zusätzliche Verzögerung tatsächlich zwischen Referenzecho und Echo von Objekten 22 wirksam wird. Eine Verzögerung zwischen Sende-/Empfangseinheit 12 und den Koppelstellen 28, 30 würde lediglich ein globales Offset sämtlicher Echos bewirken. Die Verzögerungselemente 36, 38 können als Verzögerungsleitungen ausgeführt sein, beispielsweise als Mikrostreifenleitung oder als Koplanarleitung. Alternative Ausführungsformen sind denkbar, wobei hier auf die Ausgestaltungsmöglichkeiten der Referenzleitung 26 verwiesen wird, ohne diese eigens zu wiederholen.

Die Radarvorrichtung 10 kann auch mehrkanalig sein, also mehrere Sende- und Empfangspfade aufweisen. Für den erläuterten Selbsttest wird dann ein Referenzecho über eine Referenzleitung 26 von jeweils einem Sender auf einen Empfänger geführt. Denkbar ist dabei auch, mit einer Referenzleitung aus demselben Sender ein Referenzecho für mehrere Empfänger zu erzeugen. Für eine reflexionsarme und gerichtete Überkopplung auf mehrere Leitungen ist ein Wilkinson-Teiler vorteilhaft, der wiederum vorzugsweise in Streifenleitungstechnik realisiert ist.

Zumindest einer der Empfangskanäle kann auch statt über ein Referenzecho mittels einer Plausibilitätsprüfung getestet werden. Das Empfangssignal verschiedener Empfangskanäle sollte bei ähnlicher Antennencharakteristik ein ähnliches Amplitudenverhalten lediglich mit anderer Phase zeigen. Damit kann eine Plausibilitätsprüfung nicht nur im Signalpfad bis zur Antennenzuleitung, sondern auch im gesamten Sende-Empfangssystem einschließlich der Antennen den Selbsttest ersetzen oder ergänzen.

**Patentansprüche**

1. Sichere Radarvorrichtung (10) zur Erfassung eines Objekts (22) in einem Überwachungsbereich (20), die eine Sende-/Empfangseinheit (12) mit mindestens einer über eine Verbindungsleitung angeschlossenen Antenne (16) zum Aussenden eines Radarsignals (18) und zum Erzeugen eines Empfangssignals aus einem Radarsignalecho des Radarsignals (18) an dem Objekt (22), ein internes Referenzziel (26) zum Erzeugen eines Referenzechos sowie eine Auswertungseinheit (24) aufweist, die dafür ausgebildet ist, das Objekt (22) durch Auswertung des Empfangssignals zu erfassen und die Funktionsfähigkeit der Radarvorrichtung (10) anhand des Referenzechos zu prüfen,
**dadurch gekennzeichnet,**
**dass** das interne Referenzziel eine Referenzleitung (26) aufweist, auf den das von der Sende-Empfangseinheit (12) erzeugte Signal an einer ersten Koppelstelle (28) vor der Abstrahlung als Radarsignal (18) von der Verbindungsleitung (14) überspricht und von dem das Signal nach Weiterleitung auf der Referenzleitung (26) an einer zweiten Koppelstelle (30) als Referenzecho auf die Verbindungsleitung (14) überspricht.

2. Radarvorrichtung (10) nach Anspruch 1, wobei die Antenne (16) eine Sendeantenne (16a) und eine Empfangsantenne (16b) und die Verbindungsleitung (14) eine erste Verbindungsleitung (14a) mit der ersten Koppelstelle (28) zwischen der Sende-/Empfangseinheit (12) und der Sendeantenne (16a) und eine zweite Verbindungsleitung (14b) mit der zweiten Koppelstelle (30) zwischen der Empfangsantenne (16b) und der Sende-/Empfangseinheit (12) aufweist.

3. Radarvorrichtung (10) nach Anspruch 1 oder 2, wobei die Antenne (16) eine Patchantenne aufweist.

4. Radarvorrichtung (10) nach einem der vorhergehenden Ansprüche, wobei die Referenzleitung (26) eine Mikrostreifenleitung oder Koplanarleitung aufweist.

5. Radarvorrichtung (10) nach einem der vorhergehenden Ansprüche, wobei die Referenzleitung (26) einen Hohlleiter oder einen dielektrischen Wellenleiter aufweist.

6. Radarvorrichtung (10) nach einem der vorhergehenden Ansprüche, wobei die erste Koppelstelle (28) und/oder die zweite Koppelstelle (30) einen Richtkoppler aufweist.

7. Radarvorrichtung (10) nach einem der vorhergehenden Ansprüche, wobei die Referenzleitung (26) mindestens ein angepasstes Dämpfungselement (32, 34) aufweist.

8. Radarvorrichtung (10) nach einem der vorhergehenden Ansprüche, wobei das Radarsignal (18) mit einer Bandbreite von mehreren GHz oder mehreren zehn GHz moduliert wird.

9. Radarvorrichtung (10) nach einem der vorhergehenden Ansprüche, wobei die Verbindungsleitung (14) mindestens ein Verzögerungselement (36, 38) aufweist, insbesondere zwischen Koppelstelle (28, 30) und Antenne (16).

10. Radarvorrichtung (10) nach einem der vorhergehenden Ansprüche, wobei die Sende-/Empfangseinheit (12) mehrere Sende- und/oder Empfangskanäle aufweist und wobei die Referenzleitung (26) das Signal eines Sendekanals auf einen Empfangskanal oder auf mehrere Empfangskanäle zurückführt.

11. Radarvorrichtung (10) nach Anspruch 10, wobei die Steuer- und Auswertungseinheit (24) dafür ausgebildet ist, bei der Prüfung auf Funktionsfähigkeit der Radarvorrichtung (10) Empfangssignale aus mehreren Empfangskanälen miteinander zu vergleichen.

12. Radarvorrichtung (10) nach Anspruch 11, wobei die Steuer- und Auswertungseinheit (24) dafür ausgebildet ist, mindestens einen Sende-/Empfangskanal mittels Referenzleitung (26) und mindestens einen Sende-/Empfangskanal nur durch Vergleich der Empfangssignale zu prüfen.

13. Radarvorrichtung (10) nach einem der vorhergehenden Ansprüche, wobei die Auswertungseinheit (24) dafür ausgebildet ist, aus dem Empfangssignal eine Signallaufzeit und damit eine Entfernung zu dem Objekt (22) zu bestimmen.

14. Radarvorrichtung (10) nach einem der vorhergehenden Ansprüche, die als scannendes System zum Abtasten des Überwachungsbereichs (20) ausgebildet ist.

15. Verfahren zur sicheren Erfassung eines Objekts (22) in einem Überwachungsbereich (20) mit einer Radarvorrichtung (10), bei dem ein Radarsignal (18) von einer Sende-/Empfangseinheit (12) über eine mit einer Verbindungsleitung (14) angeschlossene Antenne (16) ausgesandt und aus einem Signalecho des Radarsignals (18) an dem Objekt (22) ein Empfangssignal erzeugt wird, das ausgewertet wird, um das Objekt (22) zu erfassen, wobei die Funktionsfähigkeit der Radarvorrichtung (10) anhand eines Referenzechos eines internen Referenzziels (26) der Radarvorrichtung (10) geprüft wird, **dadurch gekennzeichnet,** **dass** das Referenzecho erzeugt wird, indem ein Signal der Sende-/Empfangseinheit (12) vor Abstrahlen an der Antenne (16) an einer ersten Koppelstelle (28) von der Verbindungsleitung (14) auf eine Referenzleitung (26) überspricht, auf der Referenzleitung (26) zu einer zweiten Koppelstelle (30) geführt wird, dort wieder auf die Verbindungsleitung (14) überspricht und in der Sende-Empfangseinheit (12) empfangen wird.

**Geänderte Patentansprüche gemäss Regel 137(2) EPÜ.**

1. Im Sinne einer Sicherheitsnorm sichere Radarvorrichtung (10) zur Erfassung eines Objekts (22) in einem Überwachungsbereich (20) in sicherheitstechnischer Anwendung zur Detektion von gefährlichen Situationen durch zu große Annäherung an einen Gefahrenbereich, die eine Sende-/Empfangseinheit (12) mit mindestens einer über eine Verbindungsleitung angeschlossenen Antenne (16) zum Aussenden eines Radarsignals (18) und zum Erzeugen eines Empfangssignals aus einem Radarsignalecho des Radarsignals (18) an dem Objekt (22), ein internes Referenzziel (26) zum Erzeugen eines Referenzechos, das einem scheinbaren Objekt in einer bekannten Entfernung entspricht, sowie eine Auswertungseinheit (24) aufweist, die dafür ausgebildet ist, das Empfangssignal auszuwerten, um das Objekt (22) anhand des Radarsignalechos zu erfassen und die Funktionsfähigkeit der Radarvorrichtung (10) anhand des Referenzechos zu prüfen und bei Erkennen eines Fehlers, wenn das Referenzecho nicht mehr einer Erwartung entspricht, eine Absicherungsmaßnahme auszulösen, **dadurch gekennzeichnet,** **dass** das interne Referenzziel eine Referenzleitung (26) aufweist, auf den das von der Sende-Empfangseinheit (12) erzeugte Signal an einer ersten Koppelstelle (28) vor der Abstrahlung als Radarsignal (18) von der Verbindungsleitung (14) überspricht und von dem das Signal nach Weiterleitung auf der Referenzleitung (26) an einer zweiten Koppelstelle (30) als Referenzecho auf die Verbindungsleitung (14) überspricht, so dass im Empfangssignal das Radarsignalecho und das Referenzecho zeitlich getrennt sind.

2. Radarvorrichtung (10) nach Anspruch 1, wobei die Antenne (16) eine Sendeantenne (16a) und eine Empfangsantenne (16b) und die Verbindungsleitung (14) eine erste Verbindungsleitung (14a) mit der ersten Koppelstelle (28) zwischen der Sende-/Empfangseinheit (12) und der Sendeantenne (16a) und eine zweite Verbindungsleitung (14b) mit der zweiten Koppelstelle (30) zwischen der Empfangsantenne (16b) und der Sende-/Empfangseinheit (12) aufweist.

3. Radarvorrichtung (10) nach Anspruch 1 oder 2, wobei die Antenne (16) eine Patchantenne aufweist.

4. Radarvorrichtung (10) nach einem der vorhergehenden Ansprüche, wobei die Referenzleitung (26) eine Mikrostreifenleitung oder Koplanarleitung aufweist.

5. Radarvorrichtung (10) nach einem der vorhergehenden Ansprüche, wobei die Referenzleitung (26) einen Hohlleiter oder einen dielektrischen Wellenleiter aufweist.

6. Radarvorrichtung (10) nach einem der vorhergehenden Ansprüche,

wobei die erste Koppelstelle (28) und/oder die zweite Koppelstelle (30) einen Richtkoppler aufweist.

7. Radarvorrichtung (10) nach einem der vorhergehenden Ansprüche,
   wobei die Referenzleitung (26) mindestens ein angepasstes Dämpfungselement (32, 34) aufweist.

8. Radarvorrichtung (10) nach einem der vorhergehenden Ansprüche,
   wobei das Radarsignal (18) mit einer Bandbreite von mehreren GHz oder mehreren zehn GHz moduliert wird.

9. Radarvorrichtung (10) nach einem der vorhergehenden Ansprüche,
   wobei die Verbindungsleitung (14) mindestens ein Verzögerungselement (36, 38) aufweist, insbesondere zwischen Koppelstelle (28, 30) und Antenne (16).

10. Radarvorrichtung (10) nach einem der vorhergehenden Ansprüche,
    wobei die Sende-/Empfangseinheit (12) mehrere Sende- und/oder Empfangskanäle aufweist und wobei die Referenzleitung (26) das Signal eines Sendekanals auf einen Empfangskanal oder auf mehrere Empfangskanäle zurückführt.

11. Radarvorrichtung (10) nach Anspruch 10,
    wobei die Auswertungseinheit (24) dafür ausgebildet ist, bei der Prüfung auf Funktionsfähigkeit der Radarvorrichtung (10) Empfangssignale aus mehreren Empfangskanälen miteinander zu vergleichen.

12. Radarvorrichtung (10) nach Anspruch 11,
    wobei die Auswertungseinheit (24) dafür ausgebildet ist, mindestens einen Sende-/Empfangskanal mittels Referenzleitung (26) und mindestens einen Sende-/Empfangskanal nur durch Vergleich der Empfangssignale zu prüfen.

13. Radarvorrichtung (10) nach einem der vorhergehenden Ansprüche,
    wobei die Auswertungseinheit (24) dafür ausgebildet ist, aus dem Empfangssignal eine Signallaufzeit und damit eine Entfernung zu dem Objekt (22) zu bestimmen.

14. Radarvorrichtung (10) nach einem der vorhergehenden Ansprüche,
    die als scannendes System zum Abtasten des Überwachungsbereichs (20) ausgebildet ist.

15. Verfahren zur sicheren Erfassung eines Objekts (22) in einem Überwachungsbereich (20)) in sicherheitstechnischer Anwendung zur Detektion von gefährlichen Situationen durch zu große Annäherung an einen Gefahrenbereich mit einer im Sinne einer Sicherheitsnorm sicheren Radarvorrichtung (10), bei dem ein Radarsignal (18) von einer Sende-/Empfangseinheit (12) über eine mit einer Verbindungsleitung (14) angeschlossene Antenne (16) ausgesandt und aus einem Radarsignalecho des Radarsignals (18) an dem Objekt (22) ein Empfangssignal erzeugt wird, das ausgewertet wird, um das Objekt (22) anhand des Radarsignalechos zu erfassen und die Funktionsfähigkeit der Radarvorrichtung (10) anhand eines Referenzechos eines internen Referenzziels (26) der Radarvorrichtung (10) zu prüfen, wobei das Referenzecho einem scheinbaren Objekt in einer bekannten Entfernung entspricht, und um bei Erkennen eines Fehlers, wenn das Referenzecho nicht mehr einer Erwartung entspricht, eine Absicherungsmaßnahme auszulösen,
    **dadurch gekennzeichnet,**
    **dass** das Referenzecho erzeugt wird, indem ein Signal der Sende-/Empfangseinheit (12) vor Abstrahlen an der Antenne (16) an einer ersten Koppelstelle (28) von der Verbindungsleitung (14) auf eine Referenzleitung (26) überspricht, auf der Referenzleitung (26) zu einer zweiten Koppelstelle (30) geführt wird, dort wieder auf die Verbindungsleitung (14) überspricht und in der Sende-Empfangseinheit (12) empfangen wird, so dass im Empfangssignal das Radarsignalecho und das Referenzecho zeitlich getrennt sind.

Figur 1

Figur 2

Figur 3

Europäisches Patentamt
European Patent Office
Office européen des brevets

# EUROPÄISCHER RECHERCHENBERICHT

**Nummer der Anmeldung**

EP 18 21 4292

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2006/291537 A1 (FULLERTON LARRY W [US] ET AL) 28. Dezember 2006 (2006-12-28) * Absätze [0013], [0017], [0095], [0096]; Abbildung 7 * ----- | 1,3-15 | INV. G01S7/40 ADD. G01S13/08 |
| X | US 5 841 393 A (SAITO TAMIO [JP] ET AL) 24. November 1998 (1998-11-24) * Spalte 1, Zeile 16; Abbildung 8 * ----- | 1-13,15 | |
| X | US 3 090 955 A (THEODORE HUBKA ET AL) 21. Mai 1963 (1963-05-21) * Spalte 1, Zeile 4; Abbildung 4 * ----- | 1-13,15 | |
| X | US 2013/204566 A1 (SGARZ HEIKO [DE] ET AL) 8. August 2013 (2013-08-08) * Absätze [0006], [0013], [0039]; Abbildung 3 * ----- | 1-13,15 | |
| A | US 2017/090014 A1 (SUBBURAJ KARTHIK [IN] ET AL) 30. März 2017 (2017-03-30) * Abbildung 6 * ----- | 11 | |
| A | US 2012/050094 A1 (NAKABAYASHI KENTO [JP] ET AL) 1. März 2012 (2012-03-01) * Absatz [0055] * ----- | 12 | **RECHERCHIERTE SACHGEBIETE (IPC)** G01S |

Der vorliegende Recherchenbericht wurde für alle Patentansprüche erstellt

| Recherchenort | Abschlußdatum der Recherche | Prüfer |
|---|---|---|
| München | 25. Juni 2019 | Ferrara, Michele |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 21 4292

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-06-2019

| Im Recherchenbericht angeführtes Patentdokument | Datum der Veröffentlichung | Mitglied(er) der Patentfamilie | Datum der Veröffentlichung |
|---|---|---|---|
| US 2006291537 A1 | 28-12-2006 | US 2006291537 A1<br>US 2008151967 A1 | 28-12-2006<br>26-06-2008 |
| US 5841393 A | 24-11-1998 | CN 1174332 A<br>DE 69717563 D1<br>DE 69717563 T2<br>EP 0825455 A2<br>JP 3639056 B2<br>JP H1062525 A<br>KR 19980018214 A<br>US 5841393 A | 25-02-1998<br>16-01-2003<br>10-04-2003<br>25-02-1998<br>13-04-2005<br>06-03-1998<br>05-06-1998<br>24-11-1998 |
| US 3090955 A | 21-05-1963 | KEINE | |
| US 2013204566 A1 | 08-08-2013 | DE 202010007111 U1<br>US 2013204566 A1<br>WO 2011144363 A1 | 26-08-2010<br>08-08-2013<br>24-11-2011 |
| US 2017090014 A1 | 30-03-2017 | CN 107923973 A<br>EP 3356849 A1<br>JP 2018529967 A<br>US 2017090014 A1<br>US 2019154797 A1<br>WO 2017059317 A1 | 17-04-2018<br>08-08-2018<br>11-10-2018<br>30-03-2017<br>23-05-2019<br>06-04-2017 |
| US 2012050094 A1 | 01-03-2012 | CN 102385053 A<br>DE 102011081677 A1<br>JP 5620757 B2<br>JP 2012052928 A<br>US 2012050094 A1 | 21-03-2012<br>29-03-2012<br>05-11-2014<br>15-03-2012<br>01-03-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19744731 A1
- EP 2755044 A1
- DE 102010002759 A1
- DE 102006022830 A1
- US 6954172 B2
- DE 102011089421 A1
- DE 102009001265 A1
- DE 202017103676 U1
- US 5432516 A
- US 7295151 B2
- DE 4340756 A1